Europäisches Patentamt

(19) European Patent Office

Office européen des brevets

(11) Veröffentlichungsnummer: **0 082 932**
**A2**

## (12) EUROPÄISCHE PATENTANMELDUNG

(21) Anmeldenummer: **82109497.6**

(22) Anmeldetag: **14.10.82**

(51) Int. Cl.³: **B 60 K 9/00**
**B 60 K 1/00, B 60 K 5/00**

(30) Priorität: **21.12.81 DE 3150611**

(43) Veröffentlichungstag der Anmeldung:
**06.07.83 Patentblatt 83/27**

(84) Benannte Vertragsstaaten:
**AT BE CH DE FR GB IT LI NL SE**

(71) Anmelder: **M.A.N. MASCHINENFABRIK
AUGSBURG-NÜRNBERG Aktiengesellschaft
Dachauer Strasse 667 Postfach 50 06 20
D-8000 München 50(DE)**

(72) Erfinder: **Hagen, Hans, Dr.-Ing.
Adalbertstrasse 10
D-8000 München 40(DE)**

(54) **Antriebsbaugruppe für Kraftfahrzeuge mit einem Elektromotor und einem Verbrennungsmotor.**

(57) Antriebsbaugruppe für Kraftfahrzeuge mit einem Elektromotor, der auf die Triebachse des Kraftfahrzeugs arbeitet und mit einem über eine schaltbare Trennkupplung auf die Welle des Elektromotors arbeitenden Verbrennungsmotor. Im Antriebsstrang zwischen Elektromotor (10) und Triebachse (9) des Kraftfahrzeugs liegt ein Schaltgetriebe (7) mit zugehöriger Anfahr- und Schaltkupplung (6).

EP 0 082 932 A2

Croydon Printing Company Ltd

0082932

.ba/fr

M.A.N. MASCHINENFABRIK AUGSBURG-NÜRNBERG
Aktiengesellschaft

München, 17. Dezember 1981

Antriebsbaugruppe für Kraftfahrzeuge mit
einem Elektromotor und einem Verbrennungsmotor

Die Erfindung bezieht sich auf eine Antriebsbaugruppe der im Oberbegriff des Patentanspruchs 1 bezeichneten Art.

Solche Hybridantriebsaggregate dienen dazu, die Vorteile des Elektromotorantriebs für den langsamen Stadtverkehr oder für kleine Aktionsradien und die Vorteile des Verbrennungsmotorantriebs für den schnellen Fernverkehr zu kombinieren. Die Vorteile des Elektromotorantriebs bestehen vor allem darin, daß er leicht bedienbar und wirtschaftlich ist, insbesondere auch wegen der problemlosen Ab- und Einschaltbarkeit bei jedem Fahrzeugstillstand und wegen der ausgezeichneten Drehmomentcharakteristik. Darüber hinaus ist ein elektromotorischer Antrieb leise und verursacht keine Abgase; die Fahrbatterien können umweltfreundlich aufgeladen werden. Dem stehen Nachteile des Elektromotorantriebs gegenüber wie geringe Speicherfähigkeit der Fahrbatterie, hoher Raum- und Gewichtsaufwand und entsprechende Mehrbelastung des Fahrzeugs und schließlich der Zeitaufwand für das Wiederaufladen der Fahrbatterie.

6.2102

Aufgabe der vorliegenden Erfindung ist es, eine Antriebsbaugruppe mit Verbrennungsmotor und Elektromotor für Kraftfahrzeuge zu schaffen, die bei möglichst niedrigem installiertem Baugewicht einen möglichst großen Aktionsradius des Fahrzeugs zuläßt.

Erfindungsgemäß wird diese Aufgabe gelöst von einer Antriebsbaugruppe mit der Merkmalskombination des Patentanspruchs 1.

Ein Kraftfahrzeug mit einer erfindungsgemäßen Antriebsbaugruppe erreicht sowohl im Kurzstreckenverkehr als auch im Fernverkehr ausreichende Fahrleistungen, wobei gleichzeitig die installierte Leistung des Elektromotors erheblich niedriger gehalten werden kann als dies bei vorbekannten Hybridantrieben der Fall ist. Besonders für den Anfahrbereich, etwa im innerstädtischen Verkehr ist es von großem Vorteil, eine Anfahr- und Schaltkupplung mit Schaltgetriebe zu haben, da hierdurch hohe Antriebsleistungen des Elektromotors und dementsprechend aufwendige Anfahrregelungen vermeidbar sind. Durch die Kopplung von Verbrennungsmotor und Elektromotor auf einer Welle kann Baugewicht in der Weise eingespart werden, daß der Läufer des Elektromotors Schwungmasse des Verbrennungsmotors sein kann und somit ein eigenes Schwungrad des Verbrennungsmotors ganz oder zumindest teilweise wegfällt. Eine andere Gewichtseinsparung besteht darin, daß eine Anlassermaschine für den Verbrennungsmotor nicht vorgesehen werden muß, da der Elektromotor für den Anlaßvorgang des Verbrennungsmotors mit der üblicherweise in Kraftfahrzeugen vorgesehenen Anlasserbatterie betreibbar ist.

In weiterer Ausgestaltung der Erfindung ist der Elektromotor als Generator schaltbar. Dadurch ergibt sich für

6.2102
17.12.1981

eine erfindungsgemäße Antriebsbaugruppe aufgrund des Schaltgetriebes die Möglichkeit eines Betriebszustandes, indem das Fahrzeug durch den Verbrennungsmotor angetrieben wird und gleichzeitig die Fahrbatterien durch den als Generator geschalteten Elektromotor aufgeladen werden.

Vorteilhaft ist es, wenn der Elektromotor eine fremderregbare Nebenschlußwicklung aufweist und einen großen Feldstellbereich. Diese Auslegung bringt in Verbindung mit dem Schaltgetriebe und der Anfahr- und Schaltkupplung eine erhebliche Vereinfachung für die Regelung des Elektromotors, die ausschließlich auf den Feldstellbereich beschränkt bleiben kann, da bei der Regelung im Feldstellbereich nur relativ geringe Ströme zu beherrschen sind.

Bei einer weiteren bevorzugten Ausführungsform einer erfindungsgemäßen Antriebsbaugruppe soll die Trennkupplung zwischen Elektromotor und Verbrennungsmotor von der Fahrgeschwindigkeit des Kraftfahrzeugs abhängig schaltbar sein. Durch diese Ausbildung wird eine Betriebsweise ermöglicht, bei der in einem unteren Geschwindigkeitsbereich, etwa bis zu der im innerstädtischen Bereich maximal auftretenden Geschwindigkeit bei offener Trennkupplung mit reinem Elektroantrieb gefahren wird und bei Überschreiten dieser Grenzgeschwindigkeit die Trenn-kupplung automatisch eingerückt und dadurch der Verbrennungsmotor als Antrieb zugeschaltet wird.

Bei einer bevorzugten Ausführungsform der Erfindung ist für den Elektromotor ein Fahrbatteriesatz vorgesehen, der in seiner Gesamtheit mittels einer Schnellwechseleinrichtung aus dem Fahrzeug heraus bzw. in das Fahrzeug

6.2102
17.12.1981

einbaubar ist. Diese Ausbildung ist für den praktischen Betrieb insoweit von besonderem Vorteil, als für den Nahverkehr das Fahrzeug elektrisch aus den Fahrbatterien betrieben werden kann, während bei Übergang auf den Fernverkehr der Fahrbatteriesatz einfach aus dem Fahrzeug herausnehmnbar ist und damit Gepäckraum geschaffen wird und das Fahrzeuggewicht erheblich verringert wird.

Bei einer weiteren Ausführungsform der Erfindung soll der Elektromotor ersetzt sein durch mehrere kleine Elektromotoren, die mechanisch mit einer gemeinsamen Welle gekoppelt sind. Die mechanische Kopplung erfolgt dabei z. B. durch ein drehsteif auf der gemeinsamen Welle sitzendes Zahnrad mit dem jeweils die Ritzel der einzelnen Wellen der Elektromotoren kämmen. Eine solche Lösung kann sowohl Vereinfachungen im Hinblick auf die Regelung bringen als auch günstigere Platzverhältnisse im Fahrzeug.

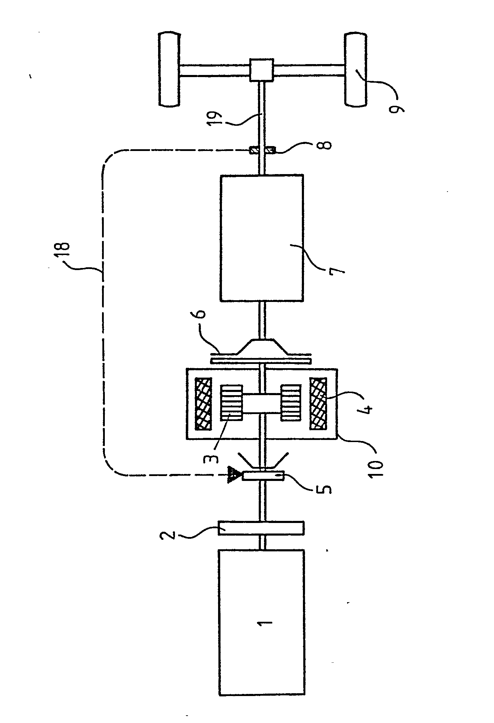

Die beigefügte Zeichnung zeigt ein Ausführungsbeispiel einer erfindungsgemäßen Antriebsbaugruppe schematisch. In der Zeichnung ist eine Triebachse eines nicht näher dargestellten Kraftfahrzeugs mit 9 bezeichnet. Die Triebachse 9 wird über eine Antriebswelle 19 von der Antriebsbaugruppe aus angetrieben. Die Antriebsbaugruppe umfaßt als Kraftmaschinen einen Verbrennungsmotor 1 mit zugehörigem Schwungrad 2 und einen Elektromotor 10 mit einem Scheiben- oder Trommelläufer 3 und einer Ständerwicklung 4. Ein zum Elektromotor 10 gehöriger Fahrbatteriesatz ist nicht dargestellt. Der Verbrennungsmotor 1 arbeitet über eine schaltbare Trennkupplung 5 auf die Welle des Elektromotors 10. Zwischen Elektromotor 10 und Triebachse 9 ist ein Schaltgetriebe 7 gelegt, wobei zwischen dem Elektromotor 10 und dem Schaltgetriebe 7 eine übliche Anfahr- und Schaltkupplung 6

6.2102
17.12.1981

eingesetzt ist. Die Anfahr- und Schaltkupplung 6 ermöglicht ein Anfahren sowohl bei laufendem Verbrennungsmotor 1 als auch bei laufendem Elektromotor 10, was zur Folge hat, daß der Elektromotor 10 nur in seinem Feldstellbereich geregelt werden muß. Da der Läufer 3 des Elektromotors 10 praktisch auf der Welle des Verbrennungsmotors 1 sitzt, ist das Schwungrad 2 des Verbrennungsmotors klein ausgeführt. Am Ausgang des Schaltgetriebes 7 liegt ein Drehzahlfühler 8, zur Bestimmung der Drehzahl der Antriebswelle 19 und damit der Fahrgeschwindigkeit.

Bei einer bevorzugten Ausführungsform wird abhängig von dieser Drehzahl über eine Wirkverbindung 18 die Trennkupplung 5 aus- bzw. eingerückt.

Anstelle des Elektromotors 10 kann in der vom Verbrennungsmotor 1 zum Schaltgetriebe laufenden Welle ein Zahnrad angeordnet sein, auf welches mehrere kleine Elektromotoren arbeiten. Das Prinzip der Antriebsbaugruppe bleibt durch eine solche Anordnung unverändert. Es wird jedoch durch die Abschaltbarkeit einzelner dieser kleinen Elektromotoren unter Umständen eine günstigere Regelung erzielt. Darüber hinaus kann durch die planetenförmige Anordnung der einzelnen Elektromotoren eine Verbesserung bezüglich der Platzverhältnisse im Fahrzeug erreicht werden.

6.2102
17.12.1981

0082932

ba/fr
M.A.N. MASCHINENFABRIK AUGSBURG-NÜRNBERG
Aktiengesellschaft

München, 17. Dezember 1981

P a t e n t a n s p r ü c h e

1. Antriebsbaugruppe für Kraftfahrzeuge mit einem Elektromotor, der auf die Triebachse des Kraftfahrzeugs arbeitet und mit einem über eine schaltbare Trennkupplung auf die Welle des Elektromotors arbeitenden Verbrennungsmotor, dadurch gekennzeichnet, daß im Antriebsstrang zwischen Elektromotor (10) und Triebachse (9) des Kraftfahrzeugs ein Schaltgetriebe (7) mit zugehöriger Anfahr- und Schaltkupplung (6) liegt.

2. Antriebsbaugruppe nach Anspruch 1, dadurch gekennzeichnet, daß der Elektromotor (10) als Generator schaltbar ist.

3. Antriebsbaugruppe nach den Ansprüchen 1 und 2, dadurch gekennzeichnet, daß der Elektromotor (10) eine fremderregbare Nebenschlußwicklung aufweist und einen großen Feldstellbereich.

4. Antriebsbaugruppe nach den Ansprüchen 1 bis 3, dadurch gekennzeichnet, daß die Trennkupplung (5)

6.2102

zwischen Elektromotor (10) und Verbrennungsmotor (1) von der Fahrgeschwindigkeit des Kraftfahrzeugs abhängig schaltbar ist.

5. Antriebsbaugruppe nach den Ansprüchen 1 bis 4, dadurch gekennzeichnet, daß für den Elektromotor ein Fahrbatteriesatz vorgesehen ist, der in seiner Gesamtheit oder in einzelnen Komponenten mittels einer Schnellwechseleinrichtung aus dem Fahrzeug heraus bzw. in das Fahrzeug einbaubar ist.

6. Antriebsbaugruppe nach den Ansprüchen 1 bis 5, dadurch gekennzeichnet, daß anstelle eines Elektromotors deren mehrere vorhanden sind, die mechanisch mit einer gemeinsamen Welle gekoppelt sind, auf die der Verbrennungsmotor arbeitet.

6.2102
17.12.1981

1/1

0082932